# EUROPÄISCHE PATENTSCHRIFT

(11) **EP 1 801 635 B1**
(45) Veröffentlichungstag und Bekanntmachung des Hinweises auf die Patenterteilung: **13.11.2013**
(21) Anmeldenummer: 06026450.4
(22) Anmeldetag: 20.12.2006
(51) Int. Cl.: G02F 1/03

(54) **Pockelszellen-Ansteuerschaltung zur schnellen Variation der Pulsamplitude von kurzen oder ultrakurzen Laserpulsen**
Pockels Cells control circuit for rapid variation of the pulse amplitude of short or ultra short laser pulses
Commutateur de commande de cellules de Pockels pour la variation rapide de l'amplitude de pulsations de pulsations laser courtes ou ultracourtes

(30) Priorität: 22.12.2005 DE 102005061716
(43) Veröffentlichungstag der Anmeldung: 27.06.2007
(73) Patentinhaber: BME MESSGERÄTE ENTWICKLUNG KG, 82418 Murnau (DE); TRUMPF Laser GmbH + Co. KG, 78713 Schramberg (DE)
(72) Erfinder: Sutter, Dirk, 78628 Rottweil (DE); Flaig, Rainer, 78664 Eschbronn (DE)
(74) Vertreter: Kohler Schmid Möbus

(56) Entgegenhaltungen:
- DE-A1- 10 251 888
- US-A- 3 910 679
- MATSUSHIMA I ET AL: "SINGLE PULSE SWITCHOUT SYSTEM FOR A PASSIVELY MODE-LOCKED Q-SWITCHED ND:YAG LASER" REVIEW OF SCIENTIFIC INSTRUMENTS, AIP, MELVILLE, NY, US, Bd. 52, Nr. 12, Dezember 1981 (1981-12), Seiten 1860-1864, XP000711244 ISSN: 0034-6748
- NAMPOOTHIRI A V V ET AL: "Single pulse selection from a cw mode-locked laser" REVIEW OF SCIENTIFIC INSTRUMENTS, AMERICAN INSTITUTE OF PHYSICS, US, Bd. 69, Nr. 3, März 1998 (1998-03), Seiten 1240-1242, XP012036435 ISSN: 0034-6748

## Beschreibung

Die vorliegende Erfindung betrifft ein Verfahren zur Erzeugung von kurzen oder ultrakurzen Laserpulsen mit gewünschter Pulsamplitude, sowie eine Vorrichtung zur Erzeugung von kurzen oder ultrakurzen Laserpulsen mit variabler Pulsamplitude und eine Lasereinrichtung zur Erzeugung von kurzen oder ultrakurzen Laserpulsen mit variabler Pulsamplitude.

Für das Schalten von Laserpulsen werden optische Schalter oder Modulatoren verwendet, die entweder innerhalb oder außerhalb des Laser-Resonators im Strahlengang angeordnet werden können. Bei den optischen Modulatoren unterscheidet man prinzipiell zwischen elektrooptischen Modulatoren und akustooptischen Modulatoren. Ein wichtiger Parameter bei dem Einsatz von optischen Modulatoren ist die erreichbare Schaltzeit. Bei akustooptischen Modulatoren wird die erreichbare Schaltzeit durch die Schallgeschwindigkeit und den Laserstrahl-Durchmesser begrenzt, sodass in manchen Fällen die Schaltflanken von akustooptischen Modulatoren zu langsam sind, um beispielsweise Vor- oder Nachpulse in einem kurzen Abstand zum Hauptpuls effektiv zu unterdrücken. Dem gegenüber sind elektrooptische Modulatoren in jüngster Vergangenheit in Richtung auf höhere Taktraten weiterentwickelt worden, sodass sie in der Lage wären, akustooptische Modulatoren bei bestimmten Laser-Anwendungen zu ersetzen, da sie sich durch wesentlich kürzere, elektronisch bedingte Schaltflanken auszeichnen.

Elektrooptische Modulatoren sind im Regelfall so aufgebaut, dass sie eine Pockelszelle als eigentliches optisches Schaltelement mit veränderbaren optischen Eigenschaften und ein polarisations-selektives Element wie beispielsweise einen reflektierenden Analysator mit unveränderbaren optischen Eigenschaften aufweisen. Eine Pockelszelle weist im Allgemeinen einen doppelbrechenden Kristall auf, welcher in geeigneter Weise zu einem einfallenden monochromatischen und polarisierten Lichtstrahl ausgerichtet ist und an den eine elektrische Spannung in der Größenordnung von einigen 100 V bis einigen Kilovolt angelegt wird. In Verbindung mit dem polarisationsabhängigen optischen Element kann die Pockelszelle das Licht in Abhängigkeit von der an sie angelegten elektrischen Spannung
(a) an- oder abschalten oder
(b) auf zwei verschiedenen Pfaden durch ein optisches System lenken.

Die Pockelszelle kann durch eine geeignete schaltbare Hochspannungsversorgung zwischen zwei Zuständen hin und her geschaltet werden, in welchen der aus der Pockelszelle austretende Laserstrahl mit jeweils senkrecht aufeinander stehenden Polarisationsrichtungen linear polarisiert ist. Die Spannung, welche erforderlich ist, um die jeweils zwei genannten Zustände zu erreichen, ist eine Funktion der Kristallparameter und der verwendeten Wellenlänge des zu schaltenden Lichts. Es gibt Anwendungen von Pockelszellen, bei welchen diese schnell an- und abgeschaltet werden müssen, wobei beide Übergangszeiten im Bereich von wenigen Nanosekunden liegen müssen. Bei manchen Anwendungen muss nur eine dieser Übergangszeiten kurz sein, entweder das Anschalten oder das Abschalten, wobei die jeweils andere Übergangszeit durchaus im Bereich von Mikrosekunden liegen kann.

Ein derartiger, aus einer Pockelszelle und einer geeigneten schaltbaren Hochspannungsversorgung aufgebauter elektrooptischer Modulator kann beispielsweise verwendet werden, um Pulse mit einer Einzelpulsstabilität von ±13% aus dem Pulszug eines Nd:YAG-Laseroszillators mit einer Fluktuation von ±25% zu erhalten. Dies wird z.B. in der Veröffentlichung von Matsushima et al. "Single pulse switchout system for a passively mode-locked Q-switched Nd:YAG laser" (Rev. Sci. Instrum. 52(12) Dec. 1981) gezeigt.

Auch kann ein derartiger, aus einer Pockelszelle und einer geeigneten schaltbaren Hochspannungsversorgung aufgebauter elektrooptischer Modulator beispielsweise verwendet werden, um kurze Laserpulse mit einer Dauer von wenigen Nanosekunden (ns) oder ultrakurze Laserpulse mit Pikosekunden (ps)- oder Femtosekunden (fs)-Dauer optisch zu schalten, d.h. die Intensität oder die Strahlrichtung der Laserpulse zu ändern. Derartige ultrakurze Laserpulse werden bekanntermaßen durch das Verfahren der Moden-Kopplung erzeugt. Daher haben Laserstrahlquellen für ultrakurze Pulse prinzipbedingt immer sehr hohe Wiederholraten (größer als Megahertz (MHz), typischerweise 40 - 200 MHz für Festkörper-Laser) und niedrige Pulsenergien (im Nanojoule-Bereich, typischerweise 0,1 - 50 nJ). Werden einzelne Pulse oder Pulsgruppen von ps- oder fs-Laserpulsen benötigt, so wird häufig eine Pockelszelle verwendet, um diese Pulse zu selektieren. In diesem Fall muss zunächst zwischen zwei Pulsen, welche die Laserstrahlquelle typischerweise in einem zeitlichen Abstand von 5 - 25 ns aussendet, die Spannung vollständig angeschaltet werden, um nach Durchlassen eines einzigen Laserpulses 5 - 25 ns später vollständig wieder abgeschaltet zu werden.

Oftmals werden ultrakurze Laserpulse mit erheblich höherer Energie benötigt (beispielsweise tausend- bis hunderttausendfach) als sie von Laserstrahlquellen mit Moden-Kopplung direkt erzeugt werden können. Typische Anwendungen für solche Laserpulse sind beispielsweise die nichtlineare Optik oder die Materialbearbeitung mit ultrakurzen Pulsen. In einem solchen Fall werden die selektierten Pulse in einen optischen Verstärker eingekoppelt und durchlaufen diesen so oft, bis die benötigte Energie erreicht ist.

In der deutschen Patentschrift DE 102 51 888 B4 sind eine Ansteuerschaltung für eine Pockelszelle und ein Lasersystem unter Verwendung einer derartig angesteuerten Pockelszelle für die Selektion von Laserpulsen beschrieben. Die Ansteuerschaltung ist gegenüber der vormals bekannten H-Konfiguration derart verändert, dass den zwei schon vorhandenen Schaltern mindestens ein weiterer Schalter hinzugefügt wird, wobei dieser entweder einen der üblicherweise vorhandenen Nachladewiderstände ersetzt oder zu diesem parallel geschaltet ist. Mit einer derartig angesteuerten Pockelszelle kann eine effizientere Pulsselektion in Lasersystemen durchgeführt werden und es können gezielt Pulsfolgen mit definierten Zeitabständen für bestimmte Anwendungszwecke erzeugt werden.

Nachteilig ist bei elektrooptischen Modulatoren bisher insbesondere, dass die Amplitude des geschalteten Pulses durch die an dem Schalter anliegende Hochspannungs-Amplitude gewählt wird, welche nur mäßig schnell (z.B. innerhalb von Millisekunden) variiert werden kann. Dies hat zur Folge, dass die Pulsamplitude auf diese Weise nicht zwischen aufeinander folgenden Laserpulsen variiert werden kann. Es besteht andererseits in vielen Anwendungsbereichen, beispielsweise in der Materialbearbeitung, ein Bedürfnis, die Pulsenergie der hochrepetierenden Laserpulse einzelpulsgenau einstellen zu können.

Es ist daher Aufgabe der vorliegenden Erfindung, ein Verfahren und eine Vorrichtung zur Erzeugung von kurzen oder ultrakurzen Laserpulsen mit einstellbarer Pulsamplitude anzugeben, mit denen eine schnellere Variation der Pulsamplitude der mit der Pockelszelle selektierten Laserpulse möglich wird. Insbesondere soll dadurch eine einzelpulsgenaue Einstellung der Pulsamplitude ermöglicht werden.

Diese Aufgabe wird erfindungsgemäß durch ein Verfahren mit den Merkmalen des Patentanspruchs 1 und durch eine Vorrichtung mit den Merkmalen des Patentanspruchs 10 gelöst.

Der vorliegenden Erfindung liegt zunächst die Überlegung zu Grunde, mit einer im Wesentlichen gleich bleibenden Maximalamplitude der der Pockelszelle zuzuführenden Hochspannung gleichwohl eine variable Modulation der gepulsten Laserstrahlung zu erreichen, ohne dass zusätzlich ein weiterer Modulator eingesetzt werden muss. Um dieses zu erreichen, ist ein wesentlicher Gedanke der Erfindung, eine gattungsgemäße Pockelszellen-Ansteuerschaltung derart weiterzubilden, dass der Zeitpunkt des An- und/oder Abschaltens der zugeführten elektrischen Spannung veränderbar ist.

Im Einzelnen bezieht sich die Erfindung somit auf eine Pockelszellen-Ansteuerschaltung, welche eine Schalteinheit aufweist, durch die eine elektrische Spannung an die Pockelszelle an- und abschaltbar ist, und ferner eine Verzögerungseinheit, durch die der Zeitpunkt des An- und/oder Abschaltens der elektrischen Spannung steuerbar ist.

Üblicherweise ist im Strahlengang hinter der Pockelszelle ein polarisations-selektives Element wie beispielsweise ein reflektierender Analysator aufgebaut. Der elektrooptische Modulator wird somit durch die Pockelszelle und den Analysator gebildet. Die Polarisationsrichtung des Analysators ist senkrecht zu der Polarisationsrichtung des in die Pockelszelle einfallenden linear polarisierten Laserlichts. Wenn eine Hochspannung an die Pockelszelle angelegt wird, so dreht diese die Polarisationsrichtung des einfallenden Laserpulses um 90°, sodass dieser den Analysator transmittieren kann. Die an die Pockelszelle angelegte Spannungs-Zeit-Funktion bewirkt somit eine entsprechende Transmissions-Zeit-Funktion des elektrooptischen Modulators. Diese Transmissions-Zeit-Funktion wird zeitlich synchron zu den eintreffenden Laserpulsen, d.h. entweder bei jedem eintreffenden Laserpuls, also mit derselben Taktrate wie die Laserpulse, oder nur bei jedem zweiten oder allgemein n-ten Laserpuls, also mit einer durch n geteilten Taktrate der Laserpulse, in dem elektrooptischen Modulator erzeugt.

Die Transmissions-Zeit-Funktion des elektrooptischen Modulators weist mindestens eine Flanke auf, welche zeitlich derart gegenüber dem Laserpuls verschoben wird, dass für den Laserpuls die gewünschte Transmission erreicht wird. Für das Schalten von kurzen bis ultrakurzen Laserpulsen wird ein elektrooptischer Modulator verwendet, dessen Transmissions-Zeit-Funktion eine Flanke von einer derartigen Steilheit aufweist, dass die Transmission während der Zeitdauer des Laserpulses annähernd konstant ist. Die Flanke wird derart relativ zu dem Laserpuls verschoben, dass eine definierte Amplitude des geschalteten Laserpulses erreicht wird. Ein hochrepetierendes Kurz- bzw. Ultrakurzpuls-Lasersystem mit derart einzelpulsgenauer Einstellbarkeit der Pulsenergie kann vorteilhaft für die Materialbearbeitung verwendet werden, beispielsweise für das Einzelpuls-Bohren von Löchern oder Mulden mit definiertem Abtrag, insbesondere bezüglich Tiefe oder Durchmesser etc.

Die in dem elektrooptischen Modulator zu erzeugende Transmissions-Zeit-Funktion ist im Allgemeinen ein Transmissions-Puls mit einer ansteigenden und einer abfallenden Flanke, welche im Prinzip beide gleichermaßen für die Einstellung der gewünschten Transmission verwendet werden können. Falls eine der beiden Flanken langsamer ist, so wird vorzugsweise diese für die Einstellung der Transmission verwendet, da dies eine höhere Genauigkeit bei der Einstellung der Transmission erlaubt. Es kann demgemäß auch vorgesehen sein, dass eine der beiden Flanken auf elektronischem Wege künstlich verlangsamt wird.

Die Schalteinheit, durch die eine elektrische Spannung an die Pockelszelle an- und abschaltbar ist, ist im einfachsten Fall durch eine einfache Push-Pull-Schaltung gegeben. Bei dieser ist ein erstes Potential, etwa ein positiver (Hoch-)Spannungsanschluss über einen ersten Schalter mit einem Knoten verbunden, welcher mit einem ersten Anschluss der Pockelszelle verbindbar ist. Der Knoten ist über einen zweiten Schalter mit einem zweiten Potential, etwa einem Masseanschluss verbunden. Der zweite Anschluss der Pockelszelle ist ebenfalls mit dem zweiten Potential verbindbar. Die Verzögerungseinheit ist mit der Push-Pull-Schaltung verbunden. Dies kann in der Weise ausgestaltet sein, dass die Verzögerungseinheit einen Eingang für ein Triggersignal und einen ersten Ausgang und einen zweiten Ausgang aufweist, wobei der erste Ausgang mit dem ersten Schalter der Ansteuerschaltung und der zweite Ausgang mit dem zweiten Schalter der Ansteuerschaltung verbunden ist, und die Verzögerungseinheit derart steuerbar ist, dass die den Ausgängen zugeführten Steuersignale mit verschiedenen Zeitverzögerungen beaufschlagbar sind.

Wenn das erste Potential durch einen positiven (Hoch-)Spannungsanschluss gegeben ist, so kann für das zweite Potential anstelle des Masseanschluss auch ein negativer (Hoch-)Spannungsanschluss vorgesehen sein.

In der erfindungsgemäßen Ausführungsform kann die Schalteinheit durch zwei Push-Pull-Schaltungen gegeben sein. In dieser ist ein erstes Potential, etwa ein positiver (Hoch-)Spannungsanschluss über einen ersten Schalter mit einem ersten Knoten verbunden, welcher mit einem ersten Anschluss der Pockelszelle verbindbar ist, während das erste Potential über einen zweiten Schalter mit einem zweiten Knoten verbunden ist, welcher mit dem zweiten Anschluss der Pockelszelle verbindbar ist. Der erste Knoten ist über einen dritten Schalter mit einem zweiten Potential, etwa einem Masseanschluss verbunden, während der zweite Knoten über einen vierten Schalter mit dem zweiten Potential verbunden ist.

Die Verzögerungseinheit ist mit einer der beiden Push-Pull-Schaltungen verbunden. Wenn die Verzögerungseinheit mit der zweiten Push-Pull-Schaltung verbunden ist, kann dies in der Weise ausgestaltet sein, dass die Verzögerungseinheit einen Eingang für ein Triggersignal und einen ersten Ausgang und einen zweiten Ausgang aufweist, wobei der erste Ausgang mit dem dritten Schalter und der zweite Ausgang mit dem vierten Schalter verbunden ist, und die Verzögerungseinheit derart steuerbar ist, dass die den Ausgängen zugeführten Steuersignale mit einer gemeinsamen Zeitverzögerung beaufschlagbar sind.

Bei dieser Ausführungsform kann für das zweite Potential anstelle des Masseanschluss auch ein negativer (Hoch-)Spannungsanschluss vorgesehen sein, wenn das erste Potential durch einen positiven (Hoch-)Spannungsanschluss gegeben ist.

Vorzugsweise ist der Verzögerungseinheit ein Analogsignal zuführbar, mit welchem der Betrag der Zeitverzögerungen einstellbar ist.

Es kann auch vorgesehen sein, dass bei der Ausführungsform eine erste Verzögerungseinheit mit einer der beiden Push-Pull-Schaltungen verbunden ist und eine zweite Verzögerungseinheit vorgesehen ist, die mit der jeweils anderen Push-Pull-Schaltung verbunden ist und die beiden Verzögerungseinheiten durch die ihnen jeweils zugeführten Analogsignale mit verschiedenen Zeitverzögerungen beaufschlagt werden können.

Die vorliegende Erfindung bezieht sich ebenso auf eine Lasereinrichtung, welche einen Kurz- oder Ultrakurzpuls-Laser zur Erzeugung eines Pulszuges von kurzen oder ultrakurzen Laserpulsen umfasst. Die Lasereinrichtung weist ferner einen erfindungsgemäßen elektrooptischen Modulator auf, welchem die Laserpulse zugeführt werden. Der elektrooptische Modulator kann innerhalb oder außerhalb des Resonators des Kurzpuls-Lasers enthalten sein.

Die Erfindung wird nachfolgend anhand von Ausführungsbeispielen in Verbindung mit den Zeichnungen näher erläutert. Es zeigen:
- Fig. 1a,b: im Stand der Technik bekannte Ausführungsformen von elektrooptischen Modulatoren für die Selektion von Laserpulsen;
- Fig. 2: eine Ausführungsform einer Pockelszellen-Ansteuerschaltung, die nicht Gegenstand der Erfindung ist, mit einer Push-Pull-Schaltung und einer Verzögerungsschaltung;
- Fig. 3: eine Ausführungsform einer erfindungsgemäßen Pockelszellen-Ansteuerschaltung mit einer zweifachen Push-Pull-Schaltung und einer Verzögerungsschaltung zur Erzeugung von Laserpulsen mit einer gewünschten Pulsamplitude;
- Fig. 4: Zeitdiagramme zur Erläuterung einer ersten Ausführungsvariante mit dem zu modulierenden Pulszug (a), der an der Pockelszelle anliegenden Hochspannung (b) und der resultierenden Transmission des elektrooptischen Modulators (c);
- Fig. 5: Zeitdiagramme zur Erläuterung einer zweiten Ausführungsvariante mit dem zu modulierenden Pulszug (a), der an der Pockelszelle anliegenden Hochspannung (b) und der resultierenden Transmission des elektrooptischen Modulators (c);
- Fig. 6: eine erfindungsgemäße Lasereinrichtung unter Verwendung eines resonator-internen und/oder eines resonator-externen elektrooptischen Modulators zur Erzeugung kurzer oder ultrakurzer Laserpulse mit variabler Pulsamplitude, bei dem der externe und/oder der interne elektrooptische Modulator eine über die Verzögerung des Schaltverhaltens gegenüber dem Laserpuls variabel einstellbare Transmission aufweist.

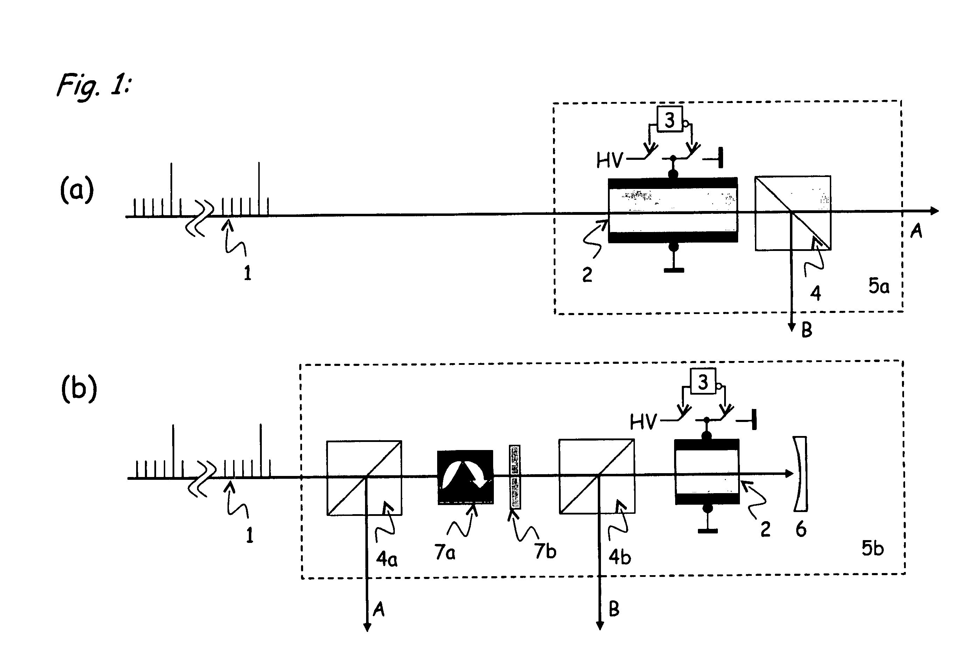

In der Fig. 1a ist eine an sich bekannte Aüsführungsform eines elektrooptischen Modulators 5a zur Modulation eines Pulszugs 1 von Laserpulsen durch eine Pockelszelle 2 dargestellt, die durch Anlegen einer Hochspannung HV durch einen Hochspannungsschalter 3 doppelbrechend wird, sodass die Polarisation des Pulszugs 1 derart gedreht wird, dass ein definierter Anteil der Laserstrahlung den Analysator 4 zu dem Ausgangsport A hin passiert, während der Rest der Laserstrahlung aus dem Ausgangsport B austritt. Durch Variation der an der Pockelszelle 2 anliegenden (Hoch-)Spannung HV von 0 V bis zu der Halbwellen-Spannung V_{λ/2} wird der Polarisationszustand des Pulszugs 1 von linear polarisiert (p-Polarisation, passiert den Analysator 4 zu dem Ausgangsport A hin) über elliptisch bis hin zu linear vertikal polarisiert (s-Polarisation, wird an dem Analysator 4 zu dem Ausgangsport B hin gespiegelt) gedreht.

In der Fig. 1b ist eine alternative, ebenfalls an sich bekannte Ausführungsform eines elektrooptischen Modulators 5b gezeigt, bei der die maximale Modulation bereits durch eine Viertelwellen-Spannung V_{λ/4} erreicht wird, da die Pockelszelle 2 nach Reflexion an dem Spiegel 6 ein zweites Mal durchlaufen wird. Die Gesamtverzögerung der Pockelszelle 2 beträgt damit schon bei einer Viertelwellen-Spannung V_{λ/4} 90° und der Laserpuls tritt nach der Spiegelung an dem Analysator 4b aus dem Ausgangsport B aus. Ohne Spannung läuft der Laserpuls durch einen Faraday-Rotator 7a und ein Halbwellen-Plättchen 7b zurück zu dem Eingangspolarisator 4b. Der Faraday-Rotator 7a bewirkt dabei eine Polarisationsdrehung um 45°, die auf dem Hinweg durch das Halbwellen-Plättchen 7b kompensiert und auf dem Rückweg dagegen zu 90° ergänzt wird. Der Polarisator 4a, der Faraday-Rotator 7a und das Halbwellen-Plättchen 7b wirken damit als eine sogenannte optische Diode.

Die Pockelszelle 2 kann z.B. aus einem in dem polarisierten Ausgangsstrahl positionierten transversal-elektrooptischen Kristall (z.B. aus Beta-Barium-Borat) bestehen, der durch Anlegen einer Hochspannung HV eine derartige Phasenverschiebung zwischen zwei orthogonalen Polarisationskomponenten bewirkt, dass die Transmission des Laserpulses durch einen nachgeschalteten Analysator gemäß sinus² (π/2 · V/V_{λ/2}) zwischen 0 und 100% hochspannungsabhängig variiert.

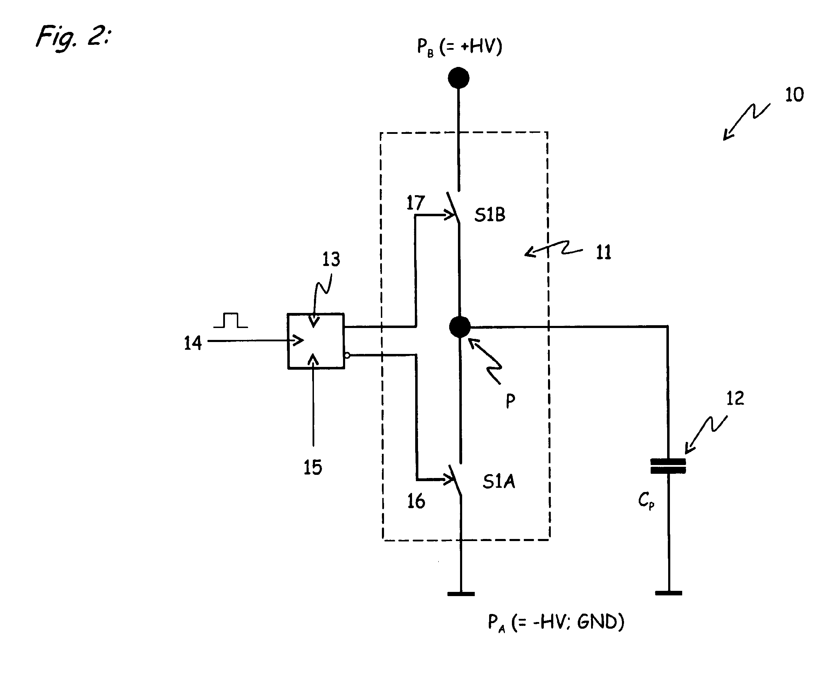

In der Fig. 2 ist eine Ausführungsform einer Pockelszellen-Ansteuerschaltung 10 schematisch dargestellt. Die Pockelszellen-Ansteuerschaltung ersetzt bei einem elektrooptischen Modulator, wie in den Fig. 1a und 1b gezeigt, den Schalter 3. Die Pockelszellen-Ansteuerschaltung 10 weist im Wesentlichen eine Schalteinheit 11 und eine Verzögerungseinheit 13 auf. Die Schalteinheit 11 ist mit einem ersten Anschluss einer Pockelszelle 12 verbindbar. Des Weiteren ist die Schalteinheit 11 mit einem ersten Potential P_{B} (Hochspannungsanschluss +HV) und einem zweiten Potential P_{A}, z.B. einem Masseanschluss (GND), verbunden. Ein zweiter Anschluss der Pockelszelle 12 wird ebenfalls mit dem zweiten Potential P_{A} verbunden. Der Masseanschluss kann auch durch einen Hochspannungsanschluss mit entgegen gesetztem Vorzeichen (-HV) gegenüber dem Hochspannungsanschluss +HV ersetzt werden. Wenn also der Hochspannungsanschluss +HV eine positive Hochspannung bereitstellt, so kann der Masseanschluss durch eine negative Hochspannung -HV ersetzt werden.

Die Schalteinheit 11 ist in dem gezeigten Ausführungsbeispiel durch eine Push-Pull-Schaltung gegeben. Diese weist in an sich bekannter Weise einen ersten Schalter S1B auf, welcher an seinem ersten Anschluss mit dem Hochspannungsanschluss +HV und an seinem zweiten Anschluss mit einem Knoten P verbunden ist. Der Knoten P ist sowohl mit einem ersten Anschluss der Pockelszelle 12 als auch mit einem ersten Anschluss eines zweiten Schalters S1A verbunden. Der zweite Anschluss des Schalters S1A ist mit dem Masseanschluss (Potential P_{A}) verbunden.

In an sich bekannter Weise werden die beiden Schalter S1A und S1B im Wechsel betrieben, um näherungsweise rechteckförmige Hochspannungspulse an die Pockelszelle 12 anzulegen. Dies ist beispielsweise in der eingangs erwähnten deutschen Patentschrift DE 102 51 888 B4 in Verbindung mit den Figuren 2a,b beschrieben. Die Hochspannungspulse werden mit einer Taktrate erzeugt, die mit der Repetitionsrate der in die Pockelszelle 12 einlaufenden Laserpulse übereinstimmt oder der N-te Teil (N = natürliche Zahl) der Repetitionsrate ist, etwa wenn nur jeder N-te Laserpuls des Pulszuges durch die Pockelszelle 12 selektiert werden soll. Eine ansteigende Flanke eines Hochspannungspulses wird erzeugt, indem gleichzeitig der erste Schalter S1B geschlossen und der zweite Schalter S1A geöffnet wird. In diesem Zustand liegt dann die Hochspannung HV an der Pockelszelle 12 an. Beim Abschalten des Hochspannungspulses wird gleichzeitig der erste Schalter S1B geöffnet und der zweite Schalter S1A geschlossen, sodass die auf dem ersten Anschluss der Pockelszelle 12 gespeicherte Ladung nach Masse abfließen kann.

Die Schaltvorgänge der Schalter S1A und S1B werden durch ein digitales Triggersignal 14 erzeugt, welches in an sich bekannter Weise - beispielsweise aus dem Pulszug - erzeugt und beiden Schaltern S1A und S1B zugeführt wird. Erfindungsgemäß wird nun das Triggersignal 14 der bereits genannten Verzögerungseinheit 13 zugeführt. In der Verzögerungseinheit 13 werden zwei digitale Steuersignale 16 und 17 erzeugt, die den beiden Schaltern S1A und S1B zugeführt werden. In der Verzögerungseinheit 13 können ferner durch ein von außen zugeführtes Analogsignal 15 die Zeitverzögerungen dieser beiden digitalen Steuersignale 16 und 17 getrennt voneinander eingestellt werden. Dieses Analogsignal 15 kann dabei durch einen D/A-Wandler aus einer digital vorgegebenen, zum Beispiel von einem Ansteuerungsrechner bestimmten Verzögerungszeit generiert werden. Das erste digitale Steuersignal 16 trifft somit an dem zweiten Schalter S1A mit der in der Verzögerungseinheit 13 durch das Analogsignal 15 eingestellten Zeitverzögerung verspätet in Bezug auf das Eintreffen des zweiten digitalen Steuersignals 17 an dem ersten Schalter S1B ein. Dies hat zur Folge, dass der an der Pockelszelle 12 anliegende Spannungspuls ebenfalls mit der in der Verzögerungseinheit 13 eingestellten Zeitverzögerung verzögert wird. Wenn der erste Schalter S1B geschlossen wird, befindet sich der zweite Schalter S1A ebenfalls noch im geschlossenen Zustand, sodass die Hochspannung der Pockelszelle 12 noch nicht zugeführt werden kann. Erst wenn nach der in der Verzögerungseinheit 13 eingestellten Zeitverzögerung der zweite Schalter S1A geöffnet wird, kann die Hochspannung an die Pockelszelle 12 angelegt werden. Beim Abschalten wird zwar der erste Schalter S1B zuerst geöffnet, der zweite Schalter S1A befindet sich jedoch noch im geöffneten Zustand, sodass die Spannung noch nicht von der Pockelszelle 12 abfließen kann. Erst wenn wiederum nach Ablauf der verzögerten Zeit der zweite Schalter S1A geschlossen wird, kann die Ladung von der Pockelszelle 12 abfließen.

Durch das der Verzögerungseinheit 13 zugeführte Analogsignal 15 kann somit der an der Pockelszelle 12 anliegende Spannungspuls beliebig zeitlich in Bezug auf den in der Pockelszelle 12 eintreffenden Laserpuls verschoben werden. Der Spannungspuls kann beispielsweise zeitlich so gesetzt werden, dass der Laserpuls auf der abfallenden Flanke des Spannungspulses in der Pockelszelle 12 eintrifft. Der Spannungspuls entspricht einem Transmissions-Puls für Laserlicht, welches einen im Strahlengang hinter der Pockelszelle 12 aufgestellten Analysator passiert. Wenn eine hohe Transmission des Laserpulses gewünscht wird, so wird der Spannungspuls an der Pockelszelle 12 zeitlich so eingestellt, dass der Laserpuls zeitlich mit dem Maximum des Spannungspulses und somit des Transmissions-Pulses zusammenfällt. Wird eine geringere Transmission des Laserpulses gewünscht, so wird der an der Pockelszelle 12 anliegende Spannungspuls durch Einstellung der Zeitverzögerung in der Verzögerungseinheit 13 durch das Analogsignal 15 derart verschoben, dass der Laserpuls zu einem Zeitpunkt in der Pockelszelle 12 eintrifft, in der diese in Verbindung mit dem nachgeschalteten Analysator eine gewünschte Transmission aufweist. Da die Schaltflanken normalerweise recht schnell sind, kann zusätzlich vorgesehen sein, dass die für die Steuerung der Transmission des Laserpulses verwendete Schaltflanke künstlich verlängert wird. Dies kann beispielsweise durch künstliche Steigerung des Leitungswiderstandes des Leitungszweiges zwischen dem Knoten P und dem Masseanschluss erfolgen. Alternativ dazu kann es auch durch Einbau einer Kapazität oder durch künstliche Erhöhung der parasitären Kapazität des Schalters S1A oder der Kapazität C_{P} der Pockelszelle 12 erfolgen.

Mit dem der Verzögerungseinheit 13 zugeführten Analogsignal 15 kann die Zeitverzögerung sehr schnell geändert werden. Insbesondere kann die Zeitverzögerung zwischen zwei direkt aufeinander folgenden Laserpulsen des Pulszuges 1 in gewünschter Weise geändert werden, sodass eine einzelpulsgenaue Steuerung der Pulsamplitude der mit der Pockelszelle 12 selektierten Laserpulse erfolgen kann.

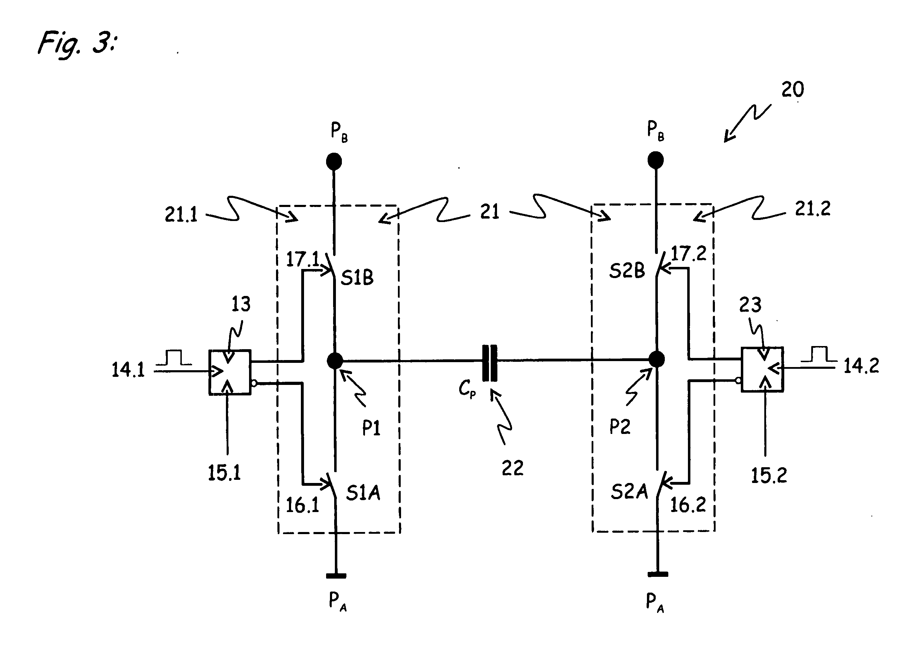

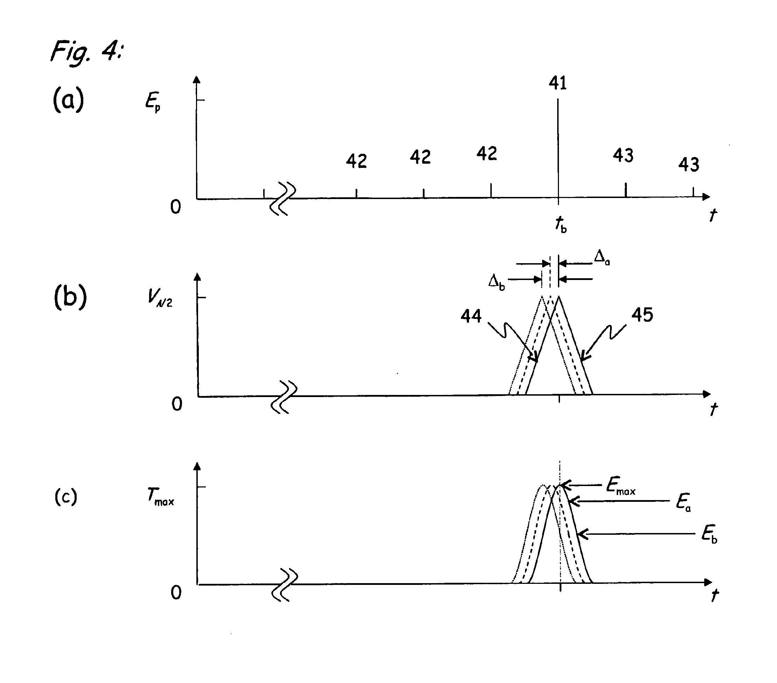

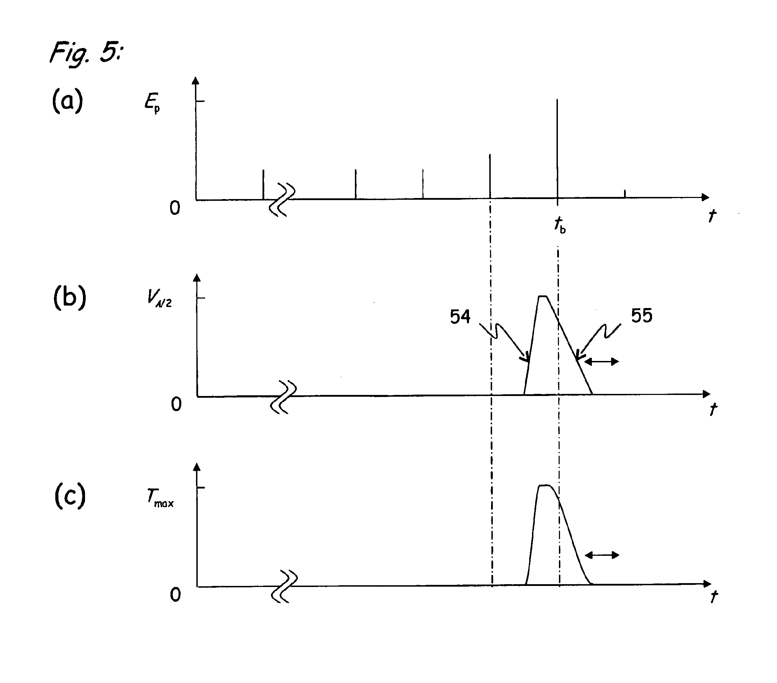

In der Fig. 3 ist eine Ausführungsform einer erfindungsgemäßen Pockelszellen-Ansteuerschaltung 20 dargestellt. Die Pockelszellen-Ansteuerschaltung 20 weist in diesem Ausführungsbeispiel eine zweifache Push-Pull-Schaltung 21, bestehend aus den beiden Push-Pull-Schaltern 21.1 und 21.2, auf, wie sie in der eingangs erwähnten deutschen Patentschrift DE 102 51 888 B4 in Verbindung mit den Figuren 4, 5a,b beschrieben worden ist.

Ein erster Anschluss einer Pockelszelle 22 ist mit einem ersten Knoten P1 verbunden, während ein zweiter Anschluss der Pockelszelle 22 mit einem zweiten Knoten P2 verbunden ist. Der erste Knoten P1 ist über einen ersten Schalter S1B mit dem ersten Potential P_{B} (Hochspannungsanschluss +HV) und über einen zweiten Schalter S1A mit dem zweiten Potential P_{A} (z.B. Masseanschluss) verbunden, während der zweite Knoten P2 über einen dritten Schalter S2B mit dem ersten Potential P_{B} und über einen vierten Schalter S2A mit dem zweiten Potential P_{A} verbunden ist. Auch in dieser Schaltung kann der Masseanschluss durch einen Hochspannungsanschluss -HV mit entgegen gesetztem Vorzeichen gegenüber dem Hochspannungsanschluss +HV ersetzt werden.

Wie in der deutschen Patentschrift DE 102 51 888 B4 beschrieben worden ist, gibt es zwei verschiedene Betriebsmodi, mit welchen die Pockelszellen-Ansteuerschaltung 20 betrieben werden kann. Bei beiden Betriebsmodi werden zum Anschalten der Pockelszelle 22 die Schalter S1A und S1B synchron und im Gegentakt angesteuert, wobei der erste Schalter S1B geschlossen und der zweite Schalter S1A geöffnet wird. Zum Ausschalten der Pockelszelle 22 werden die Schalter S2B und S2A synchron und im Gegentakt gesteuert, wobei der dritte Schalter S2B geschlossen und der vierte Schalter S2A geöffnet wird. Der erste Schalter S1B und der zweite Schalter S1A werden gemeinsam durch ein erstes Triggersignal 14.1 angesteuert, während der dritte Schalter S2B und der vierte Schalter S2A gemeinsam durch ein zweites Triggersignal 14.2 angesteuert werden.

Die Triggersignale 14.1 und 14.2 sind jeweils digitale Signale, wobei vorgesehen ist, dass nur die ansteigenden Flanken (vom Zustand 0 zum Zustand 1) Schaltvorgänge in den vier Schaltern auslösen können. Die Pockelszelle 22 wird durch das erste Triggersignal 14.1 angeschaltet, durch welches der erste Schalter S1B geschlossen und der zweite Schalter S1A geöffnet wird. In der aus DE 102 51 888 B4 bekannten Schaltung wird die Pockelszelle 22 ausgeschaltet, indem eine vorbestimmte Zeitdauer nach der ansteigenden Flanke des ersten Triggersignals 14.1 der dritte Schalter S2B und der vierte Schalter S2A mit einer ansteigenden Flanke des zweiten digitalen Triggersignals 14.2 betätigt werden.

Erfindungsgemäß ist nun vorgesehen, dass zusätzlich zu der aus DE 102 51 888 B4 bekannten Schaltung eine Verzögerungseinheit 23 vorgesehen ist, in der zwei digitale Steuersignale erzeugt werden, die den beiden Schaltern S2B und S2A zugeführt werden. Die Verzögerungseinheit 23 weist wiederum einen analogen Verzögerungssignaleingang und einen Schaltkreis auf, mit dem beide digitalen Steuersignale um die gewünschte Verzögerungszeit gegenüber dem in die Verzögerungseinheit 23 einlaufenden Triggersignal 14.2 verzögert werden. Dies hat zur Folge, dass die Pockelszelle 22 um diese in der Verzögerungseinheit 23 eingestellte Zeitverzögerung verzögert abgeschaltet wird. Die gewünschte Zeitverzögerung kann durch ein Analogsignal 15.2 vorgegeben werden, welches der Verzögerungseinheit 23 zugeführt wird. Es wird somit die abfallende Flanke des an der Pockelszelle 22 angelegten Spannungspulses für die Steuerung der Pulsamplitude des in der Pockelszelle 22 selektierten Laserpulses verwendet, indem die abfallende Flanke derart zeitlich verschoben wird, dass der Laserpuls die gewünschte Transmission durch die Pockelszelle 22 und den nachgeschalteten Analysator erfährt. Die ansteigende Flanke des an der Pockelszelle 22 anliegenden Spannungspulses bleibt dagegen in diesem Ausführungsbeispiel zeitlich unverändert.

Es kann alternativ dazu auch vorgesehen sein, dass zusätzlich die ansteigende Flanke des an der Pockelszelle 22 anliegenden Spannungspulses zeitlich verzögert wird, sodass - wie in der Ausführungsform der Fig. 2 - der gesamte Spannungspuls in gewünschter Weise zeitlich verschoben wird. Zu diesem Zweck kann in der Zuführungsleitung des ersten Triggersignals 14.1 eine Verzögerungseinheit 13 vorgesehen sein, welche in derselben Weise wie die Verzögerungseinheit 23 aufgebaut ist und welcher dasselbe Analogsignal zugeführt wird.

Es kann weiterhin vorgesehen sein, dass sowohl die ansteigende Flanke als auch die abfallende Flanke des an der Pockelszelle 22 angelegten Spannungspulses variabel zeitverzögert werden können und der Spannungspuls ferner dreieckförmig ist, d.h. das Maximum des Spannungspulses anstelle eines Plateaus eine scharfe Spitze aufweist. Es kann dann vorgesehen sein, dass der Laserpuls ständig zeitlich mit der Spitze des Spannungspulses zusammenfällt und die Höhe der Spitze verändert wird, indem die ansteigende und die abfallende Flanke durch Veränderung der Zeitverzögerungen des ersten und des zweiten Triggersignals aufeinander zu oder voneinander weg bewegt werden.

Es kann weiterhin vorgesehen sein, dass die abfallende Flanke künstlich verlängert wird, indem der Leitungswiderstand des Leitungszweiges zwischen dem Knoten P2 und dem Potential P_{A} (Masseanschluss) künstlich gesteigert wird oder indem alternativ eine zusätzliche Kapazität in diesen Leitungszweig eingefügt oder die parasitäre Kapazität des Schalters S2A künstlich erhöht wird. Solchermaßen kann die Genauigkeit der Steuerung der Transmission des durch die Pockelszelle 22 selektierten Laserpulses erhöht werden.

In der Fig. 4 ist eine erste Ausführungsvariante der Pulsamplitudensteuerung mit symmetrischen Spannungspulsen anhand von Zeitdiagrammen dargestellt, wie sie von der erfindungsgemäßen Pockelszellen-Ansteuerschaltung 10, 20 zusammen mit einem elektrooptischen Modulator durchgeführt wird.

Die Fig. 4(a) zeigt schematisch in einem Auftrag von Pulsenergie E über der Zeit t einen einzelnen Laserpuls 41 der Energie E_{P} zum Zeitpunkt t_{b} mit Vorpulsen 42 und Nachpulsen 43. Der einzelne Laserpuls 41 soll durch die Pockelszelle selektiert und die Pulsamplitude des hinter dem Analysator austretenden Laserpulses mit der Pockelszellen-Ansteuerschaltung in gewünschter Weise eingestellt werden.

In der Fig. 4(b) ist schematisch der zeitliche Verlauf der an der Pockelszelle anliegenden Spannung V dargestellt, welcher einen dreieckförmigen Verlauf mit einer linear ansteigenden Flanke 44, einer Amplitudenspitze und einer linear abfallenden Flanke 45 aufweist (durchgezogene Linie). Die Schaltflanken können beispielsweise absichtlich mindestens so langsam gewählt sein (z.B. > 15 ns), dass trotz einer unvermeidbaren Ungenauigkeit in der Synchronisation (von z.B. 250 ps) durch die Einstellung der Zeitverzögerung die Spannung ausreichend genau gewählt werden kann, welche zu dem Zeitpunkt des Eintreffens des Laserpulses in der Pockelszelle an dieser anliegt. Zur Verdeutlichung sind mit gestrichelten Linien Spannungspulse eingezeichnet, welche gegenüber dem unverzögerten Spannungspuls um Verzögerungszeiten Δₐ und Δ_{b} zeitverzögert sind. Die durch die Ungenauigkeit in der Synchronisation bedingte Amplituden-Genauigkeit soll z.B. weniger als 5% (oder 2%) betragen, wobei sich dieser Wert an der gewünschten Genauigkeit der Pulsamplitude oder Pulsenergie des selektierten Laserpulses orientiert.

In der Fig. 4(c) ist der zeitliche Verlauf des Transmissions-Vermögens T der Pockelszelle und des nachgeschalteten Analysators schematisch dargestellt. Die durchgezogene Linie ist der im Maximum (bei Anliegen der Halbwellenspannung V_{λ/2}) die Transmission Tₘₐₓ erreichende Transmissionspuls, der sich ergibt, wenn keine Zeitverzögerung eingestellt wird. Der Laserpuls trifft dann zu dem Zeitpunkt maximalen Transmissions-Vermögens in der Pockelszelle ein und verlässt die Vorrichtung mit maximaler Pulsenergie Eₘₐₓ. Die gestrichelten Linien zeigen die Transmissionspulse entsprechend den eingestellten Zeitverzögerungen Δₐ und Δ_{b}, woraus sich Pulsenergien der Laserpulse von Eₐ und E_{b} ergeben.

Erfindungsgemäß kann die zeitliche Feinabstimmung sehr schnell und genau variiert werden, sodass auch bei hoher Taktrate der zu modulierenden Laserpulse (z.B. > 10 kHz) die Laserpuls-Amplitude einzelpulsgenau variiert werden kann.

In der Fig. 5 ist gezeigt, dass die Pulsform der Hochspannungspulse auch durchaus asymmetrisch sein kann. Im vorliegenden Fall ist die abfallende Flanke 55 des an der Pockelszelle anliegenden Spannungspulses gegenüber der ansteigenden Flanke 54 verlangsamt. Dies kann beispielsweise - wie weiter oben beschrieben wurde - durch künstliche Verlangsamung des Abfließens der Ladung von den Anschlüssen der Pockelszelle, durch künstliches Erhöhen des Leiterbahnwiderstands, Einbringen einer Kapazität oder Erhöhen der parasitären Kapazität des Schalters erreicht werden.

Es ist ebenso möglich, dass der zu modulierende Pulszug mehrere, dicht benachbarte Laserpulse ähnlicher Energie enthält, die kollektiv durch den Modulator beeinflusst werden, sodass flexibel modulierbare Gruppen von Laserpulsen transmittiert werden.

Die erfindungsgemäße Pockelszellen-Ansteuerschaltung kann auch derart weitergebildet werden, dass sie zur Regelung der Pulsenergie oder Pulsamplitude der Laserpulse verwendet wird, wenn die Pulsenergie nach Verlassen des elektrooptischen Modulators gemessen und auf der Basis der gemessenen Pulsenergie die einzustellende Verzögerung durch eine Regeleinheit bestimmt wird. Die gemessene Pulsenergie kann beispielsweise mit einem in der Regeleinheit gespeicherten Wert verglichen werden. Ist die gemessene Pulsenergie zu niedrig, so wird die Verzögerung derart eingestellt, dass nachfolgend in die Pockelszelle eintretende Laserpulse eine höhere Transmission erfahren. Ist die gemessene Pulsenergie zu hoch, so wird die Verzögerung der Pockelszellen-Ansteuerschaltung derart eingestellt, dass nachfolgend in die Pockelszelle eintretende Laserpulse eine niedrigere Transmission erfahren.

Erfindungsgemäß wird ein Lasersystem (Lasereinrichtung) bestehend aus einem Kurz- oder Ultrakurzpulslaser und einem, wie vorstehend beschrieben, externen elektrooptischen Modulator mit einer solchen zeitlichen Ansteuerung für die einzelpulsgenaue Materialverarbeitung verwendet. In einer allgemeineren Ausführung muss die Modulierbarkeit nicht einzelpulsgenau erfolgen, jedoch zumindest so genau, dass in der Bearbeitung der Abtrag einer auf einen Punkt eines Werkstückes auftreffenden Pulsfolge ausreichend genau definiert werden kann.

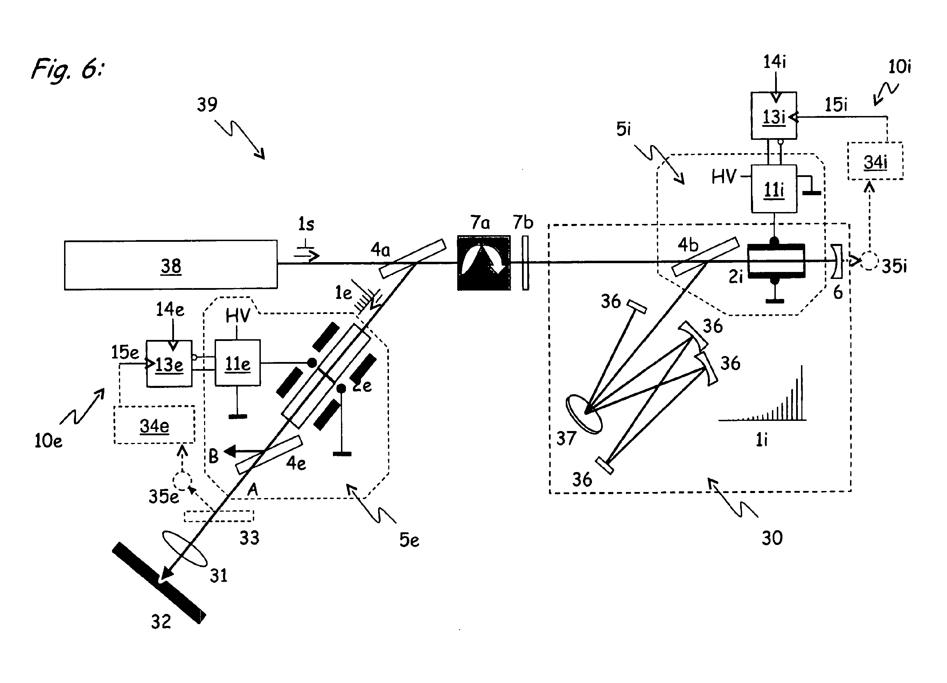

Fig. 6 zeigt eine erfindungsgemäße Lasereinrichtung 39 mit variabel einstellbarer Pulsamplitude. Ein Laseroszillator 38 generiert eine Folge von kurzen oder ultrakurzen Pulsen 1s, die einzeln über eine Fig. 1b entsprechende Anordnung in einen Verstärker 30 eingekoppelt werden. Dieser Verstärker 30 kann ein Linearverstärker oder insbesondere ein regenerativer Verstärker sein. Speziell zeigt Fig. 6 einen als Scheibenlaserverstärker ausgeführten regenerativen Verstärker.

Für derartige Verstärker mit relativ geringer Verstärkung pro Umlauf des Pulses durch den Verstärkerresonator kann die erfindungsgemäße Modulatoranordnung auf Basis einer Pockelszelle gegenüber einer Modulatoranordung mit akustooptischem Modulator besonders vorteilhaft sein. Bei nicht perfekter Reflexion des Polarisators 4b würde nämlich während der Endphase der Verstärkung unter Umständen bei jedem Umlauf ein Vorpuls aus dem Verstärker 30 austreten, und so eine schnelle Folge von Vorpulsen vor dem eigentlich erwünschten, gezielt ausgekoppelten verstärkten Puls auftreten, welche durch einen langsamen Modulator nicht ausreichend zu unterdrücken wäre. Bei geringer Verstärkung pro Umlauf ist der exponentielle Anstieg 1i der Pulsenergie pro Umlauf langsamer als bei starker Verstärkung, so dass die Amplitude des verstärkten Pulses während der letzten Umläufe bereits die Größenordnung der Zielamplitude erreicht. Entsprechend stärker lecken die Vorpulse ggfs. durch den Polarisator 4b.

Der dargestellte regenerative Scheibenlaserverstärker 30 besteht aus der aus Polarisator 4b, Pockelszelle 2i und Endspiegel 6 gebildeten Ein- und Auskoppeleinheit sowie diversen Resonatorspiegeln 36 und dem in diesem Beispiel als Scheibenlaserkristall ausgeführten Verstärkungselement 37. Solche Verstärker sind zum Beispiel aus der deutschen Patentanmeldung DE10304401A1 prinzipiell bekannt.

Der nach ausreichend vielen Verstärkungsumläufen aus dem Verstärker 30 ausgekoppelte Laserpuls 1e wird nach Durchlaufen des Halbwellenplättchens 7b und des Faraday-Rotators 7a vom Polarisator 4a reflektiert und durchläuft wie die ggfs. auftretenden Vor- und Nachpulse 1e einen hier entsprechend Fig. 1a ausgeführten externen elektrooptischen Modulator 5e, der aus einer Doppelkristallpockelszelle 2e sowie einem weiteren Analysator 4e besteht. Der externe elektrooptische Modulator 5e wird in der oben beschriebenen Weise durch eine Pockelszellen-Ansteuerschaltung 10e, bestehend aus einer getriggerten Verzögerungseinheit 13e und einer Hochspannungsschalteinheit 11e, so angesteuert, dass die Vor- und Nachpulse aufgrund der schnellen Schaltflanke unterdrückt werden und die Amplitude des Hauptpulses durch das Analogsignal 15e variabel bestimmt werden kann. Die unerwünschten Anteile des Pulszuges 1e werden vom Polarisator 4e in den Reflexionsport B reflektiert und können anschließend in einem Strahlsumpf absorbiert werden.

Der durch den externen elektrooptischen Modulator 5e selektierte und aus dem Transmissionsport A des Polarisators 4e austretende Hauptpuls kann durch eine Bearbeitungsoptik 31 auf ein Werkstück 32 gelenkt werden. Derart ist eine einzelpulsgenaue Bearbeitung des Werkstücks 32 möglich.

Zur Regelung der am Werkstück 32 auftreffenden Pulsamplitude kann durch einen Strahlteiler 33 ein Bruchteil der Pulsenergie zu einem Detektor 35e abgelenkt werden. Das Detektorsignal kann sodann in einer Regeleinheit 34e mit einem Sollwert verglichen und zur gezielten Beeinflussung des Analogsignales 15e verwendet werden, welches die Verzögerungseinheit 13e steuert.

Eine entsprechende erfindungsgemäße zeitlich variable Ansteuerung eines elektrooptischen Modulators 5i ist auch bei der resonatorinternen Pockelszelle 2i möglich. Die Komponenten des elektrooptischen Modulators 5i und der zugehörigen Pockelszellen-Ansteuerschaltung 10i entsprechen denen des elektrooptischen Modulators 5e und der zugehörigen Pockelszellen-Ansteuerschaltung 10e. Zur Regelung der Ausgangsleistung kann dort z.B. das schwache, durch den Resonatorspiegel 6 hindurchtretende Licht verwendet werden, das dann auf einen Detektor 35i trifft und in einer Regeleinheit 34i weiter verarbeitet wird.

Selbstverständlich kann der Laseroszillator 38 durch eine zusätzliche optische Diode vor Rückreflexen geschützt werden, und die Repetitionsrate der Pulse des Laseroszillators 38 kann durch einen zusätzlichen Pulspicker reduziert werden, wie es dem Fachmann bekannt ist und wie es z.B. in der oben genannten Anmeldung DE10304401A1 prinzipiell beschrieben wird.

Erfindungsgemäß wird ein Lasersystem (Lasereinrichtung) bestehend aus einem Kurz- oder Ultrakurzpulslaser und einem, wie vorstehend beschrieben, externen elektrooptischen Modulator mit einer solchen zeitlichen Ansteuerung für die einzelpulsgenaue Materialverarbeitung verwendet. In einer allgemeineren Ausführung muss die Modulierbarkeit nicht einzelpulsgenau erfolgen, jedoch zumindest so genau, dass in der Bearbeitung der Abtrag einer auf einen Punkt des Werkstückes auftreffenden Pulsfolge ausreichend genau definiert werden kann.

Die gezeigten und beschriebenen Ausführungsformen sind nicht als abschließende Aufzählung zu verstehen, sondern haben vielmehr beispielhaften Charakter für die Schilderung der Erfindung.

## Patentansprüche

1. Verfahren zur Erzeugung von kurzen oder ultrakurzen Laserpulsen mit einstellbarer Pulsamplitude, bei welchem
- ein Pulszug von Laserpulsen (1e) einer Vorrichtung (5e, 5i) zugeführt wird, die eine Pockelszelle (12; 22; 2e; 2i), eine mit dieser verbundene Pockelszellen-Ansteuerschaltung (10; 20; 10e, 10i)und ein polarisations-selektives Element, insbesondere einen Analysator (4e), welches in Ausbreitungsrichtung des Laserstrahls hinter der Pockelszelle (2e) angeordnet ist, umfasst, wobei die Pockelszellen-Ansteuerschaltung (10; 20; 10e, 10i) eine Schalteinheit (11; 21; 11e, 11i), durch welche eine elektrische Spannung an der Pockelszelle (12; 22; 2e, 2i) an- und abschaltbar ist, und eine Verzögerungseinheit (13; 23; 13e, 13i), durch welche der Zeitpunkt des An- und/oder Abschaltens der elektrischen Spannung steuerbar ist, umfasst,
- in der Vorrichtung (5e, 5i) ein Laserpuls aus dem Pulszug selektiert und einem ersten Ausgang (A) der Vorrichtung (5e, 5i) zugeführt wird, indem um den Zeitpunkt des Eintreffens des Laserpulses in der Pockelszelle (12; 22; 2e, 2i) durch die Pockelszellen-Ansteuerschaltung (10; 20; 10e, 10i) ein Spannungspuls mit einer ansteigenden Flanke (44; 54) und einer abfallenden Flanke(45; 55) an die Pockelszelle (12; 22; 2e, 2i) angelegt wird, und
- die gewünschte Pulsamplitude des selektierten Laserpulses durch Einstellen der zeitlichen Relation zwischen der ansteigenden oder abfallenden Flanke des Spannungspulses und dem Laserpuls eingestellt wird.

2. Verfahren nach Anspruch 1, **dadurch gekennzeichnet, dass** der Laserpuls zeitlich mit einer gewünschten Position auf der ansteigenden Flanke (44; 54) oder der abfallenden Flanke (45; 55) des Spannungspulses zusammenfällt.

3. Verfahren nach Anspruch 1 oder 2, **dadurch gekennzeichnet, dass** die Flanke des Spannungspulses eine derartige Steilheit aufweist, dass die Transmission der Pockelszelle (12; 22; 2e, 2i) während der Zeitdauer des Laserpulses annähernd konstant ist.

4. Verfahren nach Anspruch 1, **dadurch gekennzeichnet, dass** der Spannungspuls an der Pockelszelle (12; 22; 2e, 2i) zeitlich so eingestellt wird, dass der Laserpuls zeitlich mit dem Maximum des Spannungspulses und somit mit dem Transmissionsmaximum der Pockelszelle (12; 22; 2e, 2i) zusammenfällt.

5. Verfahren nach einem der Ansprüche 1 bis 3, **dadurch gekennzeichnet, dass** der Spannungspuls an der Pockelszelle (12; 22; 2e, 2i) zeitlich so eingestellt wird, dass der Laserpuls zeitlich gegenüber dem Maximum des Spannungspulses und somit gegenüber dem Transmissionsmaximum der Pockelszelle (12; 22; 2e, 2i) verschoben ist.

6. Verfahren nach Anspruch 1, **dadurch gekennzeichnet, dass** der Laserpuls ständig zeitlich mit dem Maximum des Spannungspulses zusammenfällt und die gewünschte Pulsamplitude des selektierten Laserpulses durch Verändern der Höhe des Maximum eingestellt wird.

7. Verfahren nach einem der vorhergehenden Ansprüche, **dadurch gekennzeichnet, dass** der Spannungspuls einen dreieckförmigen Verlauf mit einer linear ansteigenden Flanke (44), einer Amplitudenspitze und einer linear abfallenden Flanke (45) aufweist.

8. Verfahren nach einem der vorhergehenden Ansprüche, **dadurch gekennzeichnet, dass** der Spannungspuls eine symmetrische oder asymmetrische Pulsform aufweist.

9. Verfahren nach einem der vorhergehenden Ansprüche, **dadurch gekennzeichnet, dass** die Pulsamplitude und/oder Pulsenergie des selektierten Laserpulses gemessen wird und aus dem Messergebnis ein Regelsignal erzeugt wird, das der Pockelszellen-Ansteuerschaltung (10e, 10i) zugeführt wird.

10. Vorrichtung (5e, 5i) zur Erzeugung von kurzen oder ultrakurzen Laserpulsen mit variabler Pulsamplitude aus einem auf die Vorrichtung auftreffenden Laserstrahl, enthaltend:
eine Pockelszelle (12; 22; 2e; 2i),
eine mit dieser verbundene Pockelszellen-Ansteuerschaltung (10; 20; 10e, 10i) mit einer Schalteinheit (11; 21; 11e, 11i), durch welche eine elektrische Spannung an der Pockelszelle (12; 22; 2e, 2i) an- und abschaltbar ist und ein Spannungspuls entsteht, und
mit einer Verzögerungseinheit (13; 23; 13e, 13i), durch welche der Zeitpunkt des An- und/oder Abschaltens der elektrischen Spannung steuerbar ist, so dass die gewünschte Pulsamplitude eines selektierten Laserpulses durch Einstellen der zeitlichen Relation zwischen der ansteigenden oder abfallenden Flanke des Spannungspulses und dem Laserpuls eingestellt wird,
ein polarisations-selektives Element, insbesondere einen Analysator (4e), welches in Ausbreitungsrichtung des Laserstrahls hinter der Pockelszelle (2e) angeordnet ist,
einen Detektor (35e) und einen Strahlteiler (33), der einen Bruchteil der Pulsenergie des Laserstrahls zu dem Detektor (35e) ablenkt, sowie
eine Regeleinheit (34e), die das Detektorsignal mit einem Sollwert vergleicht und über ein Analogsignal (15e) die Verzögerungseinheit (13e) steuert,
wobei die die Schalteinheit (21) zwei Push-Pull-Schaltungen (21.1, 21.2) aufweist, wobei
- eine erste Push-Pull-Schaltung (21.1) einen ersten Schalter (S1B), welcher mit seinem ersten Anschluss mit einem ersten Potential (P_{B}) und mit seinem zweiten Anschluss mit einem ersten Knoten (P1) verbunden ist, und einen zweiten Schalter (S1A), welcher mit seinem ersten Anschluss mit dem ersten Knoten (P1) und mit seinem zweiten Anschluss mit einem zweiten Potential (P_{A}) verbunden ist, aufweist,
- eine zweite Push-Pull-Schaltung (21.2) einen dritten Schalter (S2B), welcher mit seinem ersten Anschluss mit dem ersten Potential (P_{B}) und mit seinem zweiten Anschluss mit einem zweiten Knoten (P2) verbunden ist, und einen vierten Schalter (S2A), welcher mit seinem ersten Anschluss mit dem zweiten Knoten (P2) und mit seinem zweiten Anschluss mit dem zweiten Potential (P_{A}) verbunden ist, aufweist,
- der erste Knoten (P1) mit einem ersten Anschluss der Pockelszelle (22) und der zweite Knoten (P2) mit einem zweiten Anschluss der Pockelszelle (22) verbunden ist,
- die Verzögerungseinheit (23) mit der zweiten Push-Pull-Schaltung (21.2) verbunden ist und einen Eingang für ein Triggersignal (14.2) und einen ersten Ausgang und einen zweiten Ausgang aufweist, wobei der erste Ausgang mit dem dritten Schalter (S2B) und der zweite Ausgang mit dem vierten Schalter (S2A) verbunden ist, und
- die Verzögerungseinheit (23) derart steuerbar ist, dass die den Ausgängen zugeführten Steuersignale (16.2, 17.2) mit einer gemeinsamen Zeitverzögerung beaufschlagbar sind.

11. Vorrichtung nach Anspruch 10, **dadurch gekennzeichnet, dass** eine weitere Verzögerungseinheit (13) mit der anderen Push-Pull-Schaltung verbunden ist und die beiden Verzögerungseinheiten (13, 23) mit verschiedenen Zeitverzögerungen beaufschlagbar sind.

12. Vorrichtung nach Anspruch 10, **dadurch gekennzeichnet, dass** der Verzögerungseinheit (23) ein Analogsignal (15.2) zuführbar ist, mit welchem der Betrag der Zeitverzögerung einstellbar ist.

13. Lasereinrichtung (39) umfassend
- einen Kurz- oder Ultrakurzpulslaser zur Erzeugung eines Pulszuges von kurzen oder ultrakurzen Laserpulsen (1e),und
- eine Vorrichtung (5e, 5i) nach einem der Ansprüche 10 bis 12, welche innerhalb oder außerhalb des Resonators des Kurz- oder Ultrakurzpulslasers enthalten ist.

14. Lasereinrichtung nach Anspruch 13, bei welcher der Kurz- oder Ultrakurzpulslaser aus einem Laseroszillator (38) sowie einem nachgeschalteten insbesondere regenerativen Verstärker (30), welcher die Laserpulse des Laseroszillators (38) verstärkt, besteht.

## Claims

1. A method for generating short or ultrashort laser pulses of variable pulse amplitude, the method comprising:
- directing a pulse train of laser pulses (1e) towards a device (5e, 5i) comprising a Pockels cell (12; 22; 2e; 2i), a Pockels cell control circuit (10; 20; 10e, 10i) connected to the Pockels cell, and a polarization-selective element, in particular an analyzer (4e), arranged downstream the Pockels cell (2e) in the direction of propagation of the laser beam, the Pockels cell control circuit (10; 20; 10e, 10i) including a switching unit (11; 21; 11e, 11i) operable to switch a voltage applied to the Pockels cell (12; 22; 2e, 2i) on and off, and a delay unit (13; 23; 13e, 13i) that controls the point in time of switching on and/or off the voltage,
- selecting a laser pulse from the pulse train in the device (5e, 5i) and directing the selected laser pulse to a first output (A) of the device (5e, 5i) by applying, by the Pockels cell control circuit (10; 20; 10e, 10i), a voltage pulse having a rising edge (44; 54) and a falling edge (45; 55) to the Pockels cell (12; 22; 2e, 2i) at the point in time when the laser pulse arrives at the Pockels cell (12; 22; 2e, 2i), and
- adjusting the desired pulse amplitude of the selected laser pulse by adjusting a temporal relationship between the rising or falling edge of the voltage pulse and the laser pulse.

2. The method according to claim 1, **characterized in that** the laser pulse coincides temporally with a desired position on the rising edge (44; 54) or on the falling edge (45; 55) of the voltage pulse.

3. The method according to claim 1 or 2, **characterized in that** the edge of the voltage pulse has such a slope that the transmission of the Pockels cell (12; 22, 2e, 2i) is essentially constant during the time period of the laser pulse.

4. The method according to claim 1, **characterized in that** the voltage pulse at the Pockels cell (12; 22; 2e, 2i) is set temporally such that the laser pulse coincides temporally with the maximum of the voltage pulse and therefore with the transmission maximum of the Pockels cell (12; 22; 2e, 2i).

5. The method according to any one of the claims 1 to 3, **characterized in that** the voltage pulse at the Pockels cell (12; 22; 2e, 2i) is set temporally such that the laser pulse is shifted in time relative to the maximum of the voltage pulse and therefore to the transmission maximum of the Pockels cell (12; 22; 2e, 2i).

6. The method according to claim 1, **characterized in that** the laser pulse permanently coincides temporally with the maximum of the voltage pulse and the desired pulse amplitude of the selected laser pulse is adjusted by varying the height of the maximum.

7. The method according to any one of the preceding claims, **characterized in that** the voltage pulse has a triangular form with a linearly rising edge (44), an amplitude peak and a linearly falling edge (45).

8. The method according to any one of the preceding claims, **characterized in that** the voltage pulse has a symmetrical or asymmetrical pulse form.

9. The method according to any one of the preceding claims, **characterized in that** the pulse amplitude and/or the pulse energy of the selected laser pulse is detected and a control signal is generated based on the detection result, which is fed to the Pockels cell control circuit (10e, 10i).

10. A device (5e, 5i) for generating short or ultrashort laser pulses of variable amplitude from a laser beam that is incident on the device, comprising:
a Pockels cell (12; 22; 2e; 2i),
a Pockels cell control circuit (10; 20; 10e, 10i) connected to the Pockels cell, including a switching unit (11; 21; 11e, 11i) which is operable to switch a voltage applied to the Pockels cell (12; 22; 2e, 2i) on and off and
generates a voltage pulse, and a delay unit (13; 23; 13e, 13i) that controls the point in time of switching on and/or off the voltage, to adjust the desired pulse amplitude of a selected laser pulse by adjusting the temporal relationship between the rising or falling edge of the voltage pulse and the laser pulse,
a polarization-selective element, in particular an analyzer (4e), arranged downstream the Pockels cell (2e) in the direction of propagation of the laser beam,
a detector (35e) and a beam splitter (33) which deflects a fraction of the pulse energy of the laser beam towards the detector (35e), and
a control unit (34e) which compares the detector signal with a desired value and controls the delay unit (13e) via an analog signal (15e),
wherein the switching unit (21) comprises two push-pull circuits (21.1, 21.2), wherein
- a first push-pull circuit (21.1) comprises a first switch (S1B), the first connection of which is connected to a first potential (P_{B}) and the second connection of which is connected to a first node (P1), and a second switch (S1A), the first connection of which is connected to the first node (P1) and the second connection of which is connected to a second potential (P_{A}),
- a second push-pull circuit (21.2) comprises a third switch (S2B), the first connection of which is connected to the first potential (P_{B}) and the second connection of which is connected to a second node (P2), and a fourth switch (S2A), the first connection of which is connected to the second node (P2) and the second connection of which is connected to the second potential (P_{A}),
- the first node (P1) is connected to a first connection of the Pockels cell (22) and the second node (P2) is connected to a second connection of the Pockels cell (22),
- the delay unit (23) is connected to the second push-pull circuit (21.2) and comprises an input for a trigger signal (14.2) and a first output and a second output, wherein the first output is connected to the third switch (S2B) and the second output is connected to the fourth switch (S2A), and
- the delay unit (23) is controllable in such a manner that the control signals (16.2, 17.2) supplied to the outputs can be provided with the same time delay.

11. The device according to claim 10, **characterized in that** a further delay unit (13) is connected to the other push-pull circuit and the two delay units (13, 23) can be provided with different time delays.

12. The device according to claim 10, **characterized in that** an analog signal (15.2) can be supplied to the delay unit (23), by means of which signal the magnitude of the time delay can be adjusted.

13. A laser device (39) comprising
- a short or ultrashort pulse laser for generating a pulse train of short or ultrashort laser pulses (1e), and
- a device (5e, 5i) according to any one of the claims 10 to 12, the device being included inside or outside of the resonator of the short or ultrashort pulse laser.

14. The laser device according to claim 13, the short or ultrashort pulse laser of which consists of a laser oscillator (38) and a downstream, in particular regenerative, amplifier (30) which amplifies the laser pulses of the laser oscillator (38).

## Revendications

1. Procédé pour générer des impulsions laser courtes ou ultracourtes ayant une amplitude d'impulsion réglage, dans lequel
- un train d'impulsions d'impulsions laser (1e) est amené à un dispositif (5e, 5i) qui comprend une cellule de Pockels (12 ; 22 ; 2e ; 2i), un circuit de commande de cellules de Pockels (10 ; 20 ; 10e; 10i) relié à celle-ci et un élément sélectif en polarisation, en particulier un analyseur (4e), qui est disposé derrière la cellule de Pockels (2e) dans la direction de propagation du faisceau laser, le circuit de commande de cellules de Pockels (10 ; 20 ; 10e; 10i) comprenant une unité de commutation (11 ; 21, 11e, 11i) par laquelle une tension électrique peut être activée et désactivée à la cellule de Pockels (12 ; 22 ; 2e ; 2i) et une unité de retard (13 ; 23, 13e, 13i) par laquelle l'instant d'activation et de désactivation de la tension électrique peut être commandé,
- dans le dispositif (5e, 5i), une impulsion laser du train d'impulsions est sélectionnée et amenée à une première sortie (A) du dispositif (5e, 5i), une impulsion de tension avec un flanc montant (44 ; 54) et un flanc descendant (45 ; 55) étant appliquée à la cellule de Pockels (12 ; 22 ; 2e ; 2i) par le circuit de commande de cellules de Pockels (10 ; 20 ; 10e; 10i) à l'instant de l'arrivée de l'impulsion laser dans la cellule de Pockels (12 ; 22 ; 2e ; 2i), et
- l'amplitude d'impulsion souhaitée de l'impulsion laser sélectionnée est réglée en réglant la relation temporelle entre le flanc montant ou descendant de l'impulsion de tension et l'impulsion laser.

2. Procédé selon la revendication 1, **caractérisé en ce que** l'impulsion laser coïncide temporellement avec une position souhaitée sur le flanc montant (44 ; 54) ou le flanc descendant (45 ; 55) de l'impulsion de tension.

3. Procédé selon la revendication 1 ou 2, **caractérisé en ce que** le flanc de l'impulsion de tension présente une pente telle que la transmission de la cellule de Pockels (12 ; 22 ; 2e ; 2i) est approximativement constante pendant la durée de l'impulsion laser.

4. Procédé selon la revendication 1, **caractérisé en ce que** l'impulsion de tension à la cellule de Pockels (12 ; 22 ; 2e ; 2i) est réglée temporellement de façon que l'impulsion laser coïncide temporellement avec le maximum de l'impulsion de tension et donc avec le maximum de transmission de la cellule de Pockels (12 ; 22 ; 2e ; 2i).

5. Procédé selon une des revendications 1 à 3, **caractérisé en ce que** l'impulsion de tension à la cellule de Pockels (12 ; 22 ; 2e ; 2i) est réglée temporellement de façon que l'impulsion laser soit décalée temporellement par rapport au maximum de l'impulsion de tension et donc par rapport au maximum de transmission de la cellule de Pockels (12 ; 22 ; 2e ; 2i).

6. Procédé selon la revendication 1, **caractérisé en ce que** l'impulsion laser coïncide toujours temporellement avec le maximum de l'impulsion de tension et l'amplitude d'impulsion souhaitée de l'impulsion laser sélectionnée est réglée en faisant varier la hauteur du maximum.

7. Procédé selon une des revendications précédentes, **caractérisé en ce que** l'impulsion de tension présente une forme triangulaire avec un flanc montant linéairement (44), un pic d'amplitude et un flanc descendant linéairement (45).

8. Procédé selon une des revendications précédentes, **caractérisé en ce que** l'impulsion de tension présente une forme d'impulsion symétrique ou asymétrique.

9. Procédé selon une des revendications précédentes, **caractérisé en ce que** l'amplitude d'impulsion et/ou l'énergie d'impulsion de l'impulsion laser sélectionnée est mesurée et qu'un signal de régulation, qui est amené au circuit de commande de cellules de Pockels (10e; 10i), est généré à partir du résultat de mesure.

10. Dispositif (5e, 5i) pour générer des impulsions laser courtes ou ultracourtes ayant une amplitude d'impulsion réglage à partir d'un faisceau laser arrivant sur le dispositif, comportant :
une cellule de Pockels (12 ; 22 ; 2e ; 2i),
un circuit de commande de cellules de Pockels (10 ; 20 ; 10e ; 10i) relié à celle-ci,
avec une unité de commutation (11 ; 21, 11e, 11i) par laquelle une tension électrique peut être activée et désactivée à la cellule de Pockels (12 ; 22 ; 2e ; 2i) et une impulsion de tension est produite, et avec une unité de retard (13 ; 23, 13e, 13i) par laquelle l'instant d'activation et de désactivation de la tension électrique peut être commandé, de façon que l'amplitude d'impulsion souhaitée d'une impulsion laser sélectionnée soit réglée en réglant la relation temporelle entre le flanc montant ou descendant de l'impulsion de tension et l'impulsion laser,
un élément sélectif en polarisation, en particulier un analyseur (4e), qui est disposé derrière la cellule de Pockels (2e) dans la direction de propagation du faisceau laser,
un détecteur (35e) et un diviseur de faisceau (33) qui dévie une fraction de l'énergie d'impulsion du faisceau laser vers le détecteur (35e), et
une unité de régulation (34e) qui compare le signal du détecteur avec une valeur de consigne et commande l'unité de retard (13e) par un signal analogique (15e),
l'unité de commutation (21) présentant deux circuits push-pull (21.1, 21.2),
- un premier circuit push-pull (21.1) présentant un premier commutateur (S1B) qui est relié par sa première connexion à un premier potentiel (P_{B}) et par sa deuxième connexion à un premier noeud (P1), et un deuxième commutateur (S1A) qui est relié par sa première connexion au premier noeud (P1) et par sa deuxième connexion à un deuxième potentiel (P_{A}),
- un deuxième circuit push-pull (21.2) présentant un troisième commutateur (S2B) qui est relié par sa première connexion au premier potentiel (P_{B}) et par sa deuxième connexion à un deuxième noeud (P2), et un quatrième commutateur (S2A) qui est relié par sa première connexion au deuxième noeud (P2) et par sa deuxième connexion au deuxième potentiel (P_{A}),
- le premier noeud (P1) étant relié à une première connexion de la cellule de Pockels (22) et le deuxième noeud (P2) à une deuxième connexion de la cellule de Pockels (22),
- l'unité de retard (23) étant reliée au deuxième circuit push-pull (21.2) et présentant une entrée pour un signal de déclenchement (14.2) et une première sortie et une deuxième sortie, la première sortie étant reliée au troisième commutateur (S2B) et la deuxième sortie au quatrième commutateur (S2A), et
- l'unité de retard (23) pouvant être commandée de façon que les signaux de commande (16.2, 17.2) amenés aux sorties puissent être soumis à un retard de temps commun.

11. Dispositif selon la revendication 10, **caractérisé en ce qu'**une autre unité de retard (13) est reliée à l'autre circuit push-pull et les deux unités de retard (13, 23) peuvent être soumises à des retards de temps différents.

12. Dispositif selon la revendication 10, **caractérisé en ce qu'**un signal analogique (15.2) peut être amené à l'unité de retard (23), avec lequel la valeur du retard de temps peut être réglée.

13. Dispositif laser (39), comprenant
- un laser à impulsions courtes ou ultracourtes permettant de générer un train d'impulsions d'impulsions laser courtes ou ultracourtes (1e), et
- un dispositif (5e, 5i) selon une des revendications 10 à 12 qui est contenu à l'intérieur ou à l'extérieur du résonateur du laser à impulsions courtes ou ultracourtes.

14. Dispositif laser selon la revendication 13, dans lequel le laser à impulsions courtes ou ultracourtes se compose d'un oscillateur laser (38) ainsi que d'un amplificateur (30), en particulier régénératif, placé en aval qui amplifie les impulsions laser de l'oscillateur laser (38).
